# EUROPÄISCHE PATENTSCHRIFT

(11) **EP 4 193 590 B1**
(45) Veröffentlichungstag und Bekanntmachung des Hinweises auf die Patenterteilung: **20.12.2023**
(21) Anmeldenummer: 21766106.5
(22) Anmeldetag: 29.07.2021
(51) Int. Cl.: H04N 7/14, H04N 23/50

(54) **KOMMUNIKATIONSROBOTER UND -SYSTEM SOWIE TELEKOMMUNIKATIONSVERFAHREN**
COMMUNICATION ROBOT AND SYSTEM AND TELECOMMUNICATION METHOD
ROBOT DE COMMUNICATION, SYSTÈME DE COMMUNICATION ET PROCÉDÉ DE TÉLÉCOMMUNICATION

(30) Priorität: 04.08.2020 DE 102020120575; 21.09.2020 DE 202020105395 U
(43) Veröffentlichungstag der Anmeldung: 14.06.2023
(73) Patentinhaber: Polymath.Vision UG (Haftungsbeschränkt), 14167 Berlin (DE)
(72) Erfinder: KARAWIA, Mohammed El-Said, 12049 Berlin (DE); MOHAMMAD, Muhannad Mazin, Davis (US); MOHAMMAD, Majd, Hollywood (US); STEIN, Maximillian, 10827 Berlin (DE)
(74) Vertreter: Werner, André
(86) Internationale Anmeldenummer: PCT/DE2021/100657
(87) Internationale Veröffentlichungsnummer: WO 2022/028650

(56) Entgegenhaltungen:
- EP-A1- 3 395 674
- US-A1- 2010 166 412
- US-A1- 2011 249 100
- US-A1- 2015 158 182
- US-A1- 2017 078 647

## Beschreibung

Die Erfindung betrifft einen Kommunikationsroboter zur telekommunikativen Verbindung von Personen an unterschiedlichen Orten. Ferner betrifft die Erfindung ein den Kommunikationsroboter integrierendes Kommunikationssystem und ein unter Verwendung des Kommunikationsroboters durchgeführtes Telekommunikationsverfahren.

Die Vorrichtungen und Verfahren zur Einrichtung und Durchführung einer audiovisuellen Telekommunikation zwischen zwei oder mehr Personen sind allgemein bekannt. Videotelefonie ist mit vielen der handelsüblichen Personalcomputer, Smartphones und Tablets unproblematisch durchführbar.

Diese Geräte erfassen jedoch im Regelfall über die integrierten Kameras und Mikrofone die Sinneswahrnehmungen der Person am Sendeort nur in begrenzter Weise. Die lichtoptische Bildaufzeichnung beschränkt sich allgemein auf den Bereich, auf den die Kamera jeweils gerichtet ist; das Mikrofon erfasst die Geräuschkulisse am Sendeort nur undifferenziert bzw. summarisch. Die lichtoptische Bildaufzeichnung kann mit Wärmesensoren, wie zum Beispiel Infrarot- oder Wärmebildkameras, erfolgen. Die Geräuschkulisse umfasst auch akustische Signale, die über Vibrations- oder Ultraschallsensoren erfassbar sind.

Die Sinnesreize, die eine Person an einem bestimmten Ort mit Augen und Ohren wahrnimmt, erzeugen bei dieser Person jedoch Sinneseindrücke, die - durch die Interpretation des Gehirns - deutlich komplexer sind. Das Zusammenspiel dieser Sinneseindrücke bestimmt letztlich die wahrgenommene Realität. Solche komplexen Sinneseindrücke sind mit den bislang bekannten, oben genannten Telekommunikationsvorrichtungen bzw. -verfahren nur in begrenztem Maße von einem Sendeort zu einem Empfangsort übertragbar.

Aufgabe der Erfindung ist es daher, eine Telekommunikationseinrichtung bzw. ein Telekommunikationssystem sowie ein mit diesen durchgeführtes Telekommunikationsverfahren bereitzustellen, die es ermöglichen, die von einer an einem Sendeort befindlichen Person wahrgenommenen Sinneseindrücke äquivalent mittels optischer und akustischer Signale zu erfassen, diese Signale zu einer anderen, an einem Empfangsort befindlichen Person zu übertragen und die Signale am Empfangsort unter Ausbildung eines realitätsnahen Abbildes der von der Person am Sendeort wahrgenommenen Sinneseindrücke wiederzugeben.

Diese Aufgabe wird durch einen Kommunikationsroboter mit den kennzeichnenden Merkmalen nach dem Anspruch 1, durch die Kommunikationssysteme mit den kennzeichnenden Merkmalen nach den Ansprüchen 11 oder 12 sowie das Telekommunikationsverfahren nach Anspruch 14 gelöst; zweckmäßige Weiterbildungen der Erfindung sind in den Ansprüchen 2 bis 10, 13 und 15 aufgeführt.

Nach Maßgabe der Erfindung umfasst der Kommunikationsroboter eine Basiseinheit und mindestens drei Stützen, die die Basiseinheit tragen und bei bestimmungsgemäßer Verwendung am Untergrund abstützen. Die Basiseinheit besitzt eine Höhenachse, die lotrecht zum Untergrund ausgerichtet ist.

In die Basiseinheit sind mehrere Komponenten, u. a. eine Kamera, ein Tonaufnahmegerät, ein Modem, eine Antenne, eine Prozessoreinheit sowie ein Energieversorgungssystem, integriert. Die Kamera erfasst das sichtbare Licht aus der Umgebung des Kommunikationsroboters richtungsabhängig in einem Umkreis von 360°. Das Tonaufnahmegerät, das mehrere stereoskopische Mikrofone beinhaltet, erfasst - synchron zur Bildaufzeichnung - die Schallwellen richtungsabhängig in einem Umkreis von 360° aus der Umgebung des Kommunikationsroboters.

Die Prozessoreinheit fungiert als Datenverarbeitungs- und Datenspeichereinheit sowie als Steuerungs- und Regelungseinheit für die anderen Komponenten des Kommunikationsroboters, mit denen die Prozessoreinheit drahtgebunden oder drahtlos verbunden ist.

Die von der Kamera aufgenommenen optischen Signale bzw. Bilder und die vom Tonaufnahmegerät detektierten akustischen Signale werden synchronisiert mit den zugeordneten Richtungsangaben mittels der Prozessoreinheit verarbeitet und können anschließend über das Modem und die Antenne drahtlos an eine externe Empfangseinrichtung gesendet werden. Die Synchronisation der optischen und akustischen Signale erfolgt sowohl in zeitlicher als auch in räumlicher Dimension, d. h., die durch die Mikrofone erfassten Töne und Geräusche werden mit den Bilddaten so verknüpft, dass der Ausgangspunkt und die Richtung der Schallwellen in einem aus den optischen Signalen erstellten virtuellen Raum realitätsgetreu abbildbar sind.

Die Verbindung des Kommunikationsroboters zur externen Empfangseinrichtung kann beispielswiese über Mobilfunk und Internet erfolgen; in die Basiseinheit können hierzu weitere für die mobile Telekommunikation erforderliche Komponenten, wie zum Beispiel Router und Verstärker, integriert sein.

Ferner weist die Basiseinheit einen Sockel auf, an dem jede der Stützen mittels jeweils eines Drehgelenks angebracht ist, wobei das Drehgelenk das Klappen bzw. das Schwenken der jeweiligen Stütze in einer durch die Höhenachse verlaufenden Radialebene der Basiseinheit ermöglicht.

Jede der Stützen weist einen Auslegerarm und einen am Auslegerarm befestigten Ausleger auf; das Drehgelenk verbindet den Sockel der Basiseinheit mit dem jeweiligen Auslegerarm der Stütze.

Die Basiseinheit besitzt ferner eine Verkleidung, die der Basiseinheit eine entlang der Höhenachse längsausgerichtete eiähnliche äußere Gestalt verleiht. In die Verkleidung sind zudem Auslegermulden eingebracht, in die die Stützen einklappbar sind. Im eingeklappten Zustand liegen die Stützen versenkt in diesen Auslegermulden.

Jeder der Ausleger weist eine der eiähnlichen äußeren Gestalt der Verkleidung der Basiseinheit entsprechende konvexe Außenkontur auf. Diese Außenkontur des Auslegers ist so geformt, dass der Ausleger bei vollständig eingeklappter Stütze in der jeweiligen Auslegermulde der Verkleidung bündig mit der außenliegenden Verkleidung eingepasst ist.

Der Kommunikationsroboter besitzt zudem eine am Sockel der Basiseinheit angeordnete Schwenkvorrichtung zum Ein- und Ausklappen der Stützen.

Der vollständig eingeklappte Zustand der Stützen wird als Ruhe- bzw. Transportmodus bezeichnet. Der Kommunikationsroboter kann in diesem Zustand als kompakte Einheit transportiert werden. Durch das Versenken der Stützen kragen im Transportmodus keine Teile von der Basiseinheit aus, wodurch das Risiko von Transportschäden deutlich reduziert wird.

Der Zustand der vollständig ausgeklappten Stützen stellt den Standardbetriebsmodus des Kommunikationsroboters dar. Der Kommunikationsroboter kann jedoch auch in den Zwischenzuständen, d. h. mit teilweise ausgeklappten Stützen, betrieben werden.

Insbesondere ist der Kommunikationsroboter durch das Gleiten der Ausleger am Untergrund während des Klappens der Stützen in der Richtung der Höhenachse verstellbar über dem Untergrund positionierbar. Die spezifische konvexe Form bzw. Außenkontur der Ausleger ermöglicht beim Gleiten der Ausleger am Untergrund gleichzeitig das Heben und Senken der Basiseinheit. Mittels der Schwenkvorrichtung kann auf diese Weise eine - ggf. automatisierte - Höhenverstellung der Basiseinheit vorgenommen werden.

Die Stützen können zudem aufgrund der ergonomischen Form der Ausleger beim händischen Transport als Griff benutzt werden, zum Beispiel, um die Position des Kommunikationsroboters am Aufstellort zu verändern.

Die durch die Verkleidung ausgebildete eiähnliche Form verleiht der Basiseinheit die eiförmigen Hüllen inhärente große Robustheit, insbesondere bei eingeklappten Stützen. Die in die Basiseinheit integrierten Komponenten sind aufgrund dieser Formgebung der Verkleidung besonders gut gegen äußere mechanische Einwirkungen, vor allem gegen Schläge und Stöße, geschützt.

Der Kommunikationsroboter erfasst als Sendeeinrichtung die optischen und akustischen Signale in unmittelbarer Nähe und im gesamten Umkreis der Person am Sendeort und kann diese dann an die externe Empfangseinrichtung übertragen. Unter optischen Signalen sind allgemein alle elektromagnetischen Wellen des Lichtspektrums zu verstehen. Die optischen Signale können - über das sichtbare Licht hinaus - insbesondere auch die mit Wärmesensoren bzw. Infrarotkameras erfasste Wärmestrahlung beinhalten. Die akustischen Signale umfassen alle sensorisch erfassbaren Schallwellen - unabhängig vom Übertragungsmedium. Dies schließt u. a. auch Körperschall bzw. Vibrationen ein.

Ein besonderer Vorteil des Kommunikationsroboters besteht darin, dass die Basiseinheit aufgrund ihrer Höhenverstellbarkeit mittels einer geeigneten Regelung automatisch auf Kopfhöhe der Person am Sendeort gehalten werden kann. Damit ist es mittels des Kommunikationsroboters möglich, die Umgebung in unmittelbarer Nähe der Person am Sendeort und in einer Höhe, in der sie auch von dieser Person wahrgenommen wird, nahezu vollständig optisch und akustisch zu erfassen.

Mittels der Empfangseinrichtung können die synchronisierten optischen und akustischen Signale am Empfangsort - einschließlich deren Richtungsbezogenheit - so wiedergegeben werden, dass ein realitätsnahes Abbild der Sinneseindrücke der Person am Sendeort bei der Person am Empfangsort entsteht. Die Signalübertragung vom Sende- zum Empfangsort kann sowohl durch Aufzeichnung und Wiedergabe als auch durch das sogenannte Live-Stream-Verfahren erfolgen.

Vorzugsweise beinhaltet die Basiseinheit des Kommunikationsroboters einen Bildschirm und ein im Umkreis von 360° schallaussendendes Lautsprechersystem. Der Kommunikationsroboter in dieser Ausführung ist sowohl als Sende- als auch als Empfangseinrichtung nutzbar. So können zum Beispiel die von einem ersten der Kommunikationsroboter an einem Sendeort erfassten optischen und akustischen Signale über den Bildschirm und das Lautsprechersystem eines zweiten der Kommunikationsroboter am Empfangsort realitätsgetreu wiedergegebenen werden, d. h., die Person am Empfangsort nimmt die in Echtzeit übertragenen, synchronisierten Bilder, Töne und Geräusche ebenso richtungsgetreu wahr wie die Person am Sendeort. Ein Kommunikationssystem aus zwei solchen Kommunikationsrobotern ermöglicht somit die wechselweise Telekommunikation mit realitätsnaher Abbildung der Sinneseindrücke beim jeweiligen Gegenüber.

Das erfindungsgemäße Kommunikationssystem umfasst stets einen der vorgeschlagenen Kommunikationsroboter und die Empfangseinrichtung. Diese Empfangseinrichtung kann - wie beschrieben - ein weiterer Kommunikationsroboter sein, der mit dem Bildschirm und dem Lautsprechersystem ausgestattet ist. Alternativ oder ergänzend kann die Empfangseinrichtung ein VR-Headset umfassen. Das VR-Headset (dt. VR-Kopfsprechhörer) ermöglicht die Wiedergabe von Bild und Ton in einem virtuellen Raum bzw. einer virtuellen Realität (Abkürzung: VR), d. h., die vom ersten Kommunikationsroboter aufgezeichneten optischen und akustischen Signale werden synchronisiert an das VR-Headset der Empfangseinrichtung übertragen und realitätsgetreu wiedergegeben. Die Person am Empfangsort befindet sich hierdurch in einer virtuellen Realität, die der wahrgenommenen Realität der Person am Sendeort nahezu entspricht.

Als Empfangseinrichtungen können zudem Smartphones und Personalcomputer eingesetzt werden. Die Verbindung zu dem als Sendeeinrichtung fungierenden Kommunikationsroboter kann beispielsweise über eine cloudbasierte Softwareanwendung auf dem Smartphones oder dem Personalcomputer aufgerufen werden.

Die Kommunikationssysteme mit dem erfindungsgemäßen Kommunikationsroboter bzw. Kommunikationsrobotern ermöglichen es den kommunizierenden Personen, sich virtuell in die Realität des Gegenübers zu begeben. Die Telekommunikation mittels eines solchen Kommunikationssystems kann insbesondere isoliert lebenden Personen helfen, sich mit Familie oder Freunden in einer Weise auszutauschen, die einer lebensnahen persönlichen Kommunikation nahekommt und somit die Teilhabe an deren Leben bzw. Erleben ermöglicht.

Gemäß einer Ausgestaltung des Kommunikationsroboters weist jede der Stützen ein Teleskopbein auf, das am Ausleger befestigt ist. Das Teleskopbein kann beispielweise mittels eines in den Ausleger integrierten Teleskopbein-Antriebs teleskopierbar, d. h. ein- und ausfahrbar, sein. Die Stützen mit Teleskopbein erweitern die Möglichkeit zur Höhenverstellung der Basiseinheit. Der Kommunikationsroboter gemäß dieser Ausführung verfügt folglich über zwei Mechanismen zur Höhenverstellung der Basiseinheit, nämlich den Stützenklappmechanismus und den Teleskopbeinmechanismus, die zur Höhenverstellung sequentiell wirksam werden. Zur Aufstellung des Kommunikationsroboters auf einem Stuhl oder Tischen genügt das Abstützen ohne die Teleskopbeine; bei Aufstellung auf dem Fußboden ermöglichen die Teleskopbeine, die Basiseinheit auf die Augenhöhe einer Person zu verfahren.

Der Kommunikationsroboter kann dazu eingerichtet sein, mittels der Kamera die Position der Augen der Person am Sendeort - beispielsweise via Gesichtserkennung - zu bestimmen und über eine oder beide Mechanismen zur Höhenverstellung die Basiseinheit, genauer die integrierte Kamera, auf die Höhe der Augenposition dieser Person verfahren. Durch dieses automatisierte Höhenverstellen der Basiseinheit bzw. Kamera auf Augenhöhe wird erreicht, dass Bild und Ton stets in der Raumhöhe erfasst werden, in der auch die Person am Sendeort die optischen und akustischen Sinnesreize wahrnimmt. Die Höhenverstellung kann ggf. zusätzlich mittels der Empfangseinrichtung bzw. der dort installierten Softwareanwendung ferngesteuert werden.

Weiterhin kann vorgesehen sein, dass die Basiseinheit einen Barcode-Scanner, einen QR-Code-Scanner und/oder einen RF-Scanner beinhaltet. Mittels des RF-Scanners (engl. Radio Frequency Scanner) kann der Kommunikationsroboter mit anderen elektronischen Geräten in seiner Nähe interagieren. Der Barcode-Scanner und der QR-Code-Scanner ermöglichen das automatische Lesen von Strichcodes bzw. zweidimensionalen Codematrizes (Quick Response Codes bzw. QR-Codes).

Ferner kann die Basiseinheit als Teil der Verkleidung eine Kappe aufweisen, die zumindest teiltransparent für einfallende elektromagnetische Strahlung, insbesondere für einfallendes Licht, ausgebildet ist. Alle optisch erfassenden Komponenten der Basiseinheit, wie zum Beispiel die Kamera, der Barcode-Scanner und/oder der QR-Code-Scanner, sind im oberen Bereich der Basiseinheit unter dieser Kappe angeordnet bzw. platziert. Die Kappe ist vorzugsweise als Einwegspiegel ausgebildet, der das Licht teilweise reflektiert und somit die Sicht auf die unter der Kappe angeordneten Komponenten einschränkt.

Der Kommunikationsroboter kann ferner auf einem mobilen Droiden bzw. einem Fahrwerk, zum Beispiel auf einem Raupenfahrwerk, montiert sein, um den Kommunikationsroboter im jeweiligen Raum schneller und ggf. ferngesteuert versetzen bzw. bewegen zu können. Der Kommunikationsroboter kann sich aus seiner Halterung am Fahrwerk ausklappen und zur Höhenverstellung der Basiseinheit in die bevorzugte Höhe aufrichten.

Vorzugsweise weist der Kommunikationsroboter genau drei Stützen auf. Der eingeschlossene Winkel der radial zur Höhenachse verlaufenden Erstreckungslinien zweier benachbarter Stützen liegt hierbei im Bereich zwischen 115° und 125°. Diese Dreibeinausführung gewährleistet einen sicheren, kippelfreien Stand.

Weiterhin kann der Kommunikationsroboter eine Sicherheits-Sensorik aufweisen, die die Bewegung der beweglichen Bauteile des Kommunikationsroboters, d. h. insbesondere der Stützen, bei manuellem Eingriff oder bei Kollisionen unterbricht. Die Sicherheits-Sensorik soll vor allem Verletzungen bei versehentlichen Berührungen während der Klappbewegung der Stützen verhindern. Sie umfasst hierzu beispielsweise Drucksensoren, die an den Längsseiten der Stützen angebracht sind.

Die Basiseinheit kann ferner ein Gestell zur Befestigung der in die Basiseinheit integrierten Komponenten beinhalten. Dieses ist vorzugsweise aus Leichtbaukomponenten aufgebaut, insbesondere aus Aluminiumwerkstoffen und/oder carbonfaserverstärkten Kunststoffen.

Die Verkleidung der Basiseinheit besteht ebenfalls bevorzugt aus einem carbonfaserverstärkten Kunststoff bzw. im Wesentlichen aus einem solchen Werkstoff.

Die robuste Leichtbauweise ermöglicht Ausführungen des Kommunikationsroboters mit einer Gesamtmasse von weniger als sechs Kilogramm. Der Kommunikationsroboter kann somit unproblematisch per Hand transportiert werden. Als Transporthilfe kann ein Griff in die Verkleidung integriert sein, mittels dem Kommunikationsroboter händisch oder an einem Gurt befestigt getragen werden kann.

Um die Kühlung der integrierten Komponenten zu gewährleisten, können ein oder mehrere Lüfter in die Basiseinheit integriert sein; der oder die Lüfter sind vorzugsweise im Bereich des unteren Abschlusses der Kappe angeordnet.

Der Kommunikationsroboter kann mittels des Energieversorgungssystems sowohl im Netzbetrieb als auch autark über eine Batterie oder einen Akkumulator mit elektrischer Energie versorgt werden.

Gemäß einer weiteren Ausgestaltung des Kommunikationsroboters beinhaltet die Basiseinheit eine Spektralkamera zur Bestimmung des elektromagnetischen Spektrums der von den am Sendeort beobachteten Objekten ausgehenden elektromagnetischen Strahlung. Die integrierte Spektralkamera erfasst die elektromagnetische Strahlung von einem Objekt, welches sich im Blickfeld der Spektralkamera befindet, und zeichnet die optischen Signale für mehrere Wellenlängenbereiche separat auf. Aus diesem aufgezeichneten elektromagnetischen Spektrum bzw. aus diesen Spektraldaten können, ggf. nach Rückkopplung und Analyse mit externen Datenbanken, die Material- und Zustandseigenschaften der erfassten Objekte ermittelt werden und an die externe Empfangsvorrichtung übertragen werden. Solche Material- und Zustandseigenschaften beinhalten zum Beispiel Material, Gewicht, Härte, Form und Temperatur des Objekts.

Das Kommunikationssystem kann einen ersten, eine Spektralkamera aufweisenden Kommunikationsroboter und die Empfangsvorrichtung, d. h. zum Beispiel einen zweiten Kommunikationsroboter und/oder ein VR-Headset, umfassen. Als zusätzliches Element weist die Empfangseinrichtung einen Handschuh oder einen Ganzkörperanzug mit haptischen Feedbackgewebe auf. Die Empfangseinrichtung ist eingerichtet, aus der durch die Spektralkamera erfassten elektromagnetischen Strahlung eines vom ersten Kommunikationsroboter mittels der Spektralkamera beobachteten Objektes dessen Material- und Zustandseigenschaften zu bestimmen. Anschließend werden diese Informationen an das haptische Feedbackgewebe des Handschuhs oder des Ganzkörperanzuges übertragen. Auf Basis der ermittelten Material- und Zustandseigenschaften wird im haptischen Feedbackgewebe einen Tastgefühl erzeugt, dass die Haptik des mittels der Spektralkamera beobachteten Objektes nachahmt. Diese Ausbildung des Kommunikationssystems erweitert die von der Person am Empfangsort wahrgenommene Realität über die optischen und akustischen Wahrnehmungen hinaus um haptische Sinnesreize und vervollständigt somit das Abbild der wahrgenommenen Realität.

Die Datenübertragung im Rahmen des unter Verwendung mindestens eines der Kommunikationsroboter als Sendeeinrichtung bzw. mittels der vorstehend beschriebenen Kommunikationssysteme durchgeführten Telekommunikationsverfahrens erfolgt vorzugsweise mittels Streaming. Hierzu werden die optischen und akustischen Signale von dem als Sendeeinrichtung eingerichteten Kommunikationsroboter synchronisiert mittels Streaming an eine zur realitätsgetreuen Wiedergabe der optischen und akustischen Signale eingerichtete Empfangseinrichtung übermittelt.

Zur zeitverzögerungsfreien und realitätsgetreuen Wiedergabe der optischen und akustischen Signale in der Empfangseinrichtung, kann vorgesehen sein, dass die optischen und akustischen Signale im Rahmen der Streaming-Datenübertragung in einem zwischen Sende- und Empfangseinrichtung geschalteten (leistungsstarken) Cloud-Computing-Server so synchronisiert und aufbereitet werden, dass sie in der Empfangseinrichtung unmittelbar, d. h. weitere ohne Datenverarbeitung, wiedergegeben werden können.

Die Erfindung ist nachfolgend anhand eines Ausführungsbeispiels und mit Bezug auf die schematischen Zeichnungen näher erläutert, wobei gleiche oder ähnliche Merkmale mit gleichen Bezugszeichen versehen sind. Dazu veranschaulichen:
- Fig. 1:: den Kommunikationsroboter mit ausgeklappten Auslegern und eingezogenen Teleskopbeinen in perspektivischer Frontansicht,
- Fig. 2:: den Kommunikationsroboter mit ausgeklappten Auslegern und eingezogenen Teleskopbeinen in perspektivischer Seitenansicht,
- Fig. 3:: den Kommunikationsroboter mit ausgeklappten Auslegern und ausgezogenen Teleskopbeinen in perspektivischer Frontansicht,
- Fig. 4:: den Kommunikationsroboter mit eingeklappten Stützen in perspektivischer Frontansicht,
- Fig. 5:: den Kommunikationsroboter mit eingeklappten Stützen in perspektivischer Seitenansicht,
- Fig. 6:: den Kommunikationsroboter in verschiedenen Stadien beim Ausklappen der Stützen in perspektivischen Frontansichten,
- Fig. 7:: die Höhenverstellung des Kommunikationsroboters mittels der Ausleger in verschiedenen Stadien beim Ausklappen der Stützen in perspektivischen Frontansichten, und
- Fig. 8:: die Höhenverstellung des Kommunikationsroboters mittels der Teleskopbeine in perspektivischen Frontansichten.

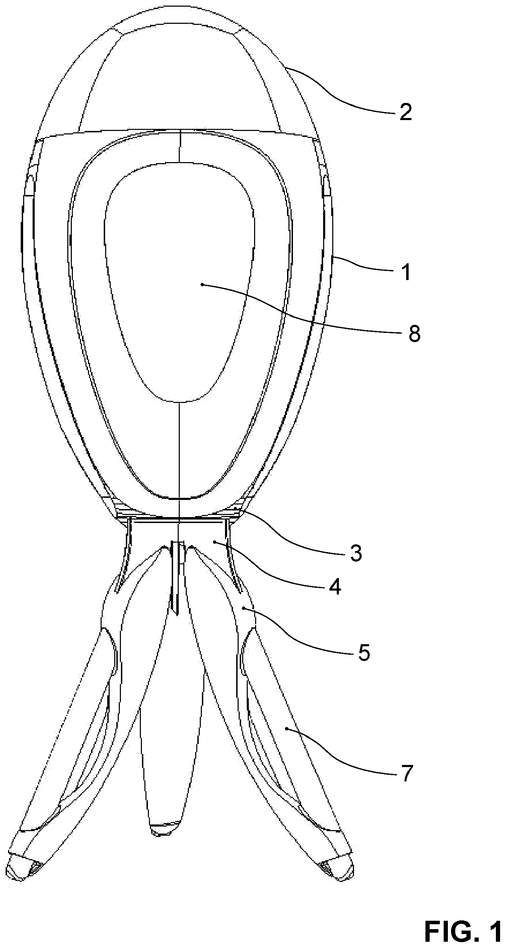

Die Basiseinheit 1 gemäß der Fig. 1 beinhaltet das (nicht dargestellte) Gestell, an bzw. auf dem die (überwiegend nicht dargestellten) Komponenten des Kommunikationsroboters befestigt sind. Die Basiseinheit 1 umfasst ferner die (nicht bezeichnete) Verkleidung, die das Gestell mit den angebrachten Komponenten umgibt und vor äußeren Einflüssen schützt. Den oberen Abschluss der Basiseinheit 1 bildet die Kappe 2.

Zu den Komponenten in der Basiseinheit 1 zählen die Kamera, die Spektralkamera, das Lautsprechersystem, das Tonaufnahmegerät, der QR-Code-Scanner, der Bildschirm 8, der Barcode-Scanner, das Modem, die Antenne, der Lüfter sowie der Ackumulator bzw. die Batterie als Stromversorgungseinrichtung.

Die Kamera, die Spektralkamera, der QR-Code-Scanner und der Barcode-Scanner befinden sich unter der als Einwegspiegel ausgebildeten Kappe 2. Die Kamera und das Tonaufnahmegerät erfassen die optischen bzw. die akustischen Signale aus der Umgebung richtungsabhängig in einem Umkreis von 360° um den Kommunikationsroboter.

Am unteren Ende der Basiseinheit 1 befindet sich dessen Sockel 3, an dem die drei Auslegerarme 4 jeweils mittels des (nicht dargestellten) Drehgelenkes befestigt sind. An den Auslegerarmen 4 sind die jeweiligen Ausleger 5 mit den darin geführten Teleskopbeinen 7 angebracht. Über die Drehgelenke sind die jeweils einen Auslegerarm 4, einen Ausleger 5 und ein Teleskopbein 7 umfassenden Stützen zum Aufstellen des Kommunikationsroboters von der Basiseinheit 1 weg ausklappbar bzw. zur Basiseinheit 1 hin einklappbar. Im eingeklappten Zustand liegen die Ausleger 5 in den formangepassten Auslegermulden 6 der Verkleidung der Basiseinheit 1. Das Ein- und Ausklappen der Stützen wird mittels der am Sockel 3 befindlichen (nicht dargestellten) Schwenkvorrichtung bewirkt; die Schwenkvorrichtung umfasst hierzu einen elektromotorischen Axialaktuator und einen elektromotorischen Radialaktuator.

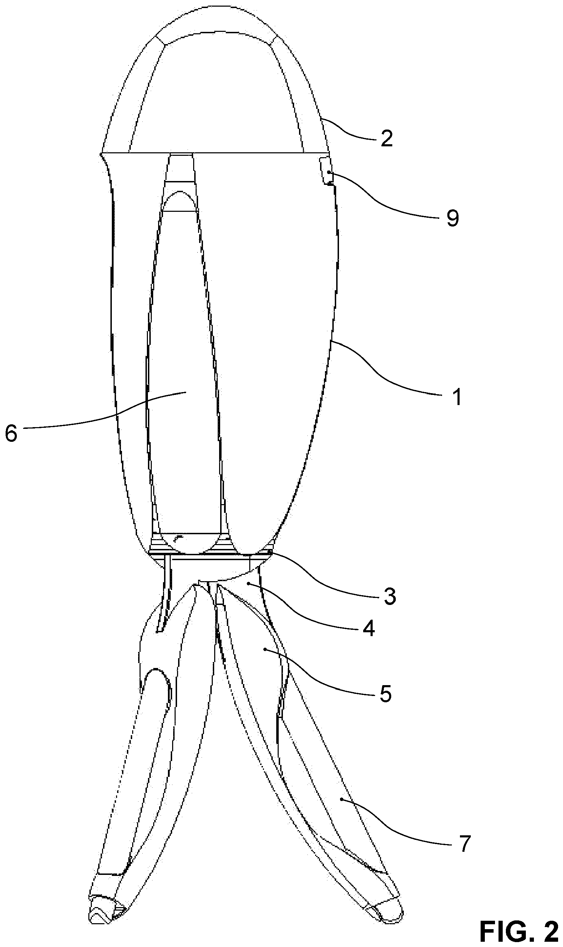

Die Seitenansicht gemäß der Fig. 2 zeigt neben den in der Fig. 1 dargestellten Baueinheiten zusätzlich den Griff 9 an der Rückseite des Kommunikationsroboters, mittels dem der Kommunikationsroboter bei vollständig eingeklappten Stützen transportierbar ist.

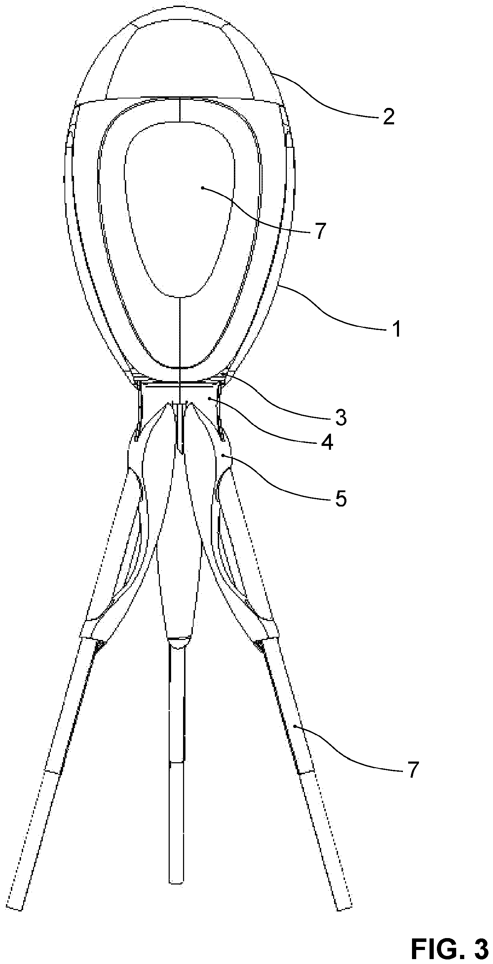

Die Fig. 3 ist eine mit Fig. 1 korrespondierende Darstellung des Kommunikationsroboters mit ausgezogenen Teleskopbeinen 7. Bei bestimmungsgemäßem Betrieb bzw. im Betriebsmodus ist die Höhenachse der Basiseinheit 1 lotrecht ausgerichtet, wobei die Teleskopbeine 7 die Basiseinheit 1 am Untergrund nach Art eines Dreibeins abstützen. Der (nicht dargestellte) Teleskopbein-Antrieb zum Aus- bzw. Einfahren der Teleskopbeine 7 befindet sich innerhalb des jeweiligen Auslegers 5.

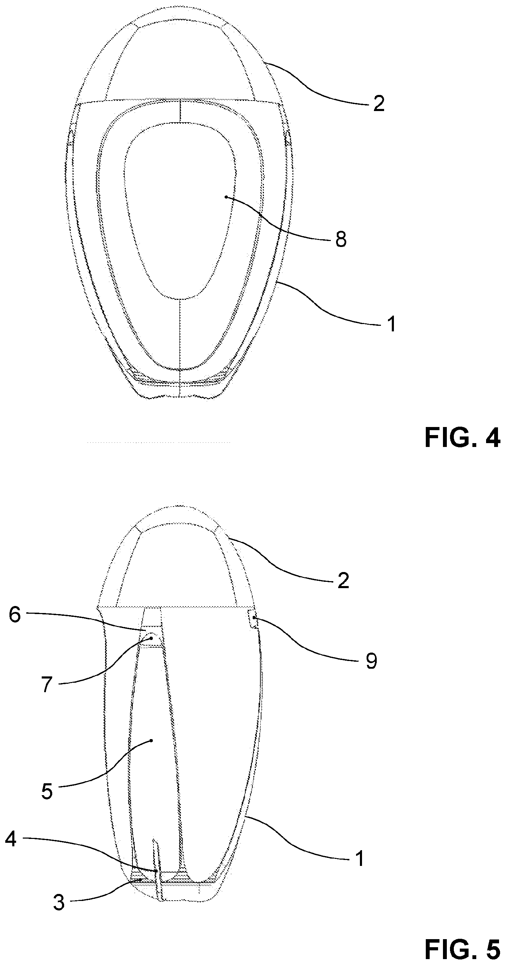

Die Darstellungen des Kommunikationsroboters mit vollständig eingeklappten Stützen gemäß der Fig. 4 und Fig. 5 verdeutlichen den Zustand des Kommunikationsroboters im Ruhe- bzw. Transportmodus. Die Stützen liegen hierbei in den formangepassten Auslegermulden 6, wobei die Ausleger 5 eine mit der außenliegenden Verkleidung bündigen Außenmantel bilden.

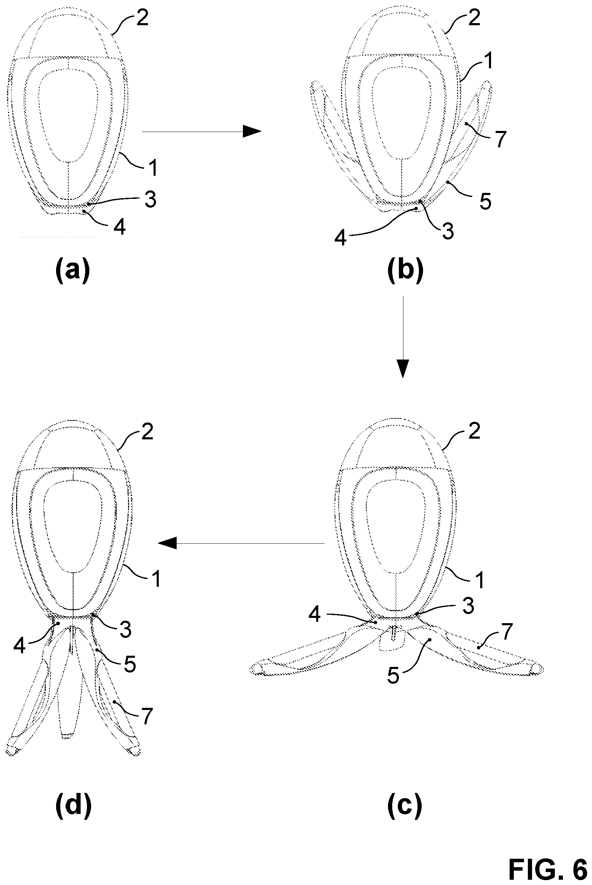

Das Ein- und Ausklappen der Stützen in unterschiedlichen Stadien veranschaulicht die Fig. 6: Hierbei zeigen die Teilabbildung nach Fig. 6 (a) den Kommunikationsroboter im Transportmodus mit eingeklappten Stützen, die Teilabbildung nach Fig. 6 (d) den Kommunikationsroboter im Standardbetriebsmodus mit ausgeklappten Stützen und die Teilabbildungen nach Fig. 6 (b) und nach Fig. 6 (c) zwei halboffene Zwischenzustände. Diese halboffenen Zwischenzustände gemäß der Abbildungen nach Fig. 6 (b) und Fig. 6 (c) bieten aufgrund der ergonomischen Form der Ausleger 5 dem Benutzer auch die Möglichkeit, den Kommunikationsroboter vor Ort herumzutragen, um zum Beispiel die Aufstellposition zu optimieren.

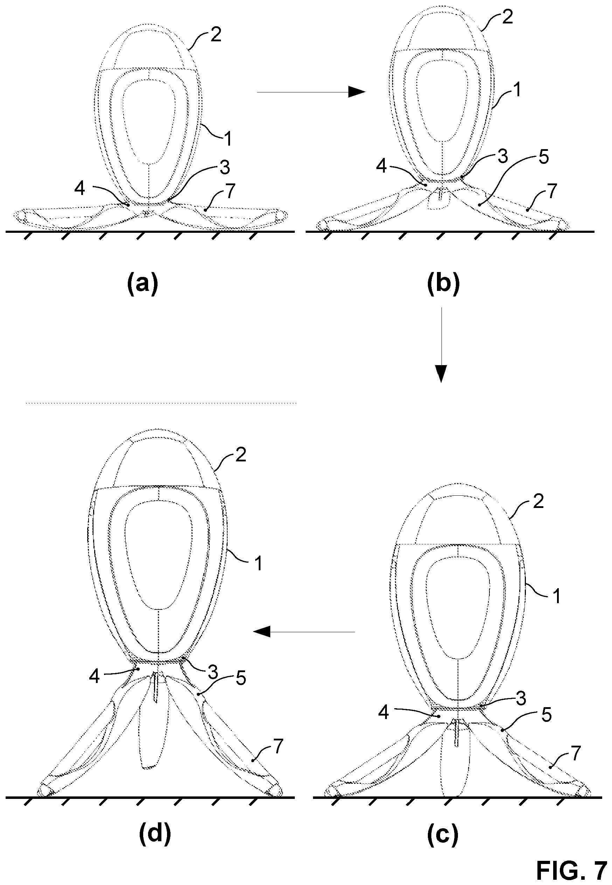

Die Fig. 7 erläutert die Möglichkeit, die Höhenverstellung des Kommunikationsroboters durch das Klappen der Ausleger 5 vorzunehmen. Hierbei stützen sich die Ausleger 5 am (nicht bezeichneten) Untergrund ab. Aufgrund der konvexen Form der Ausleger 5 gleiten diese am Untergrund und heben hierbei die Basiseinheit 1 an.

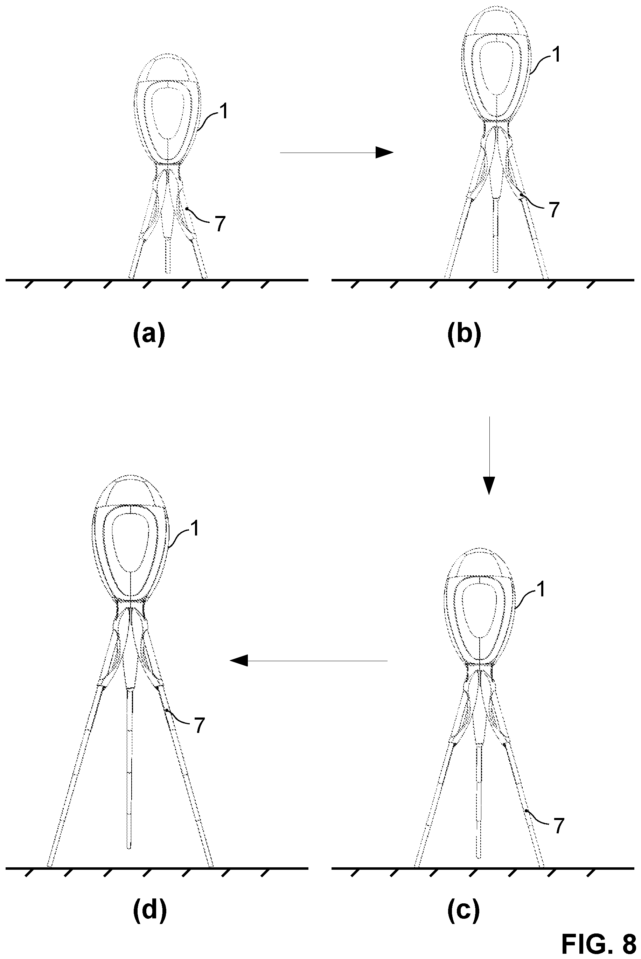

Die Höhenverstellung der Basiseinheit 1 mittels der Teleskopbeine 7 veranschaulicht Fig. 8.

### Bezugszeichenliste

- 1: Basiseinheit
- 2: Kappe
- 3: Sockel
- 4: Auslegerarm
- 5: Ausleger
- 6: Auslegermulde
- 7: Teleskopbein
- 8: Bildschirm
- 9: Griff

## Patentansprüche

1. Kommunikationsroboter, umfassend eine Basiseinheit (1) und mindestens drei Stützen, die die Basiseinheit (1) tragen und bei bestimmungsgemäßer Verwendung am Untergrund abstützen, wobei die Basiseinheit (1) eine Höhenachse aufweist, die lotrecht zum Untergrund ausgerichtet ist, wobei
- die Basiseinheit (1) eine Kamera, ein Tonaufnahmegerät, ein Modem, eine Antenne, eine Prozessoreinheit sowie ein Energieversorgungssystem beinhaltet,
- wobei die Kamera so ausgebildet ist, dass sie das sichtbare Licht als optische Signale aus der Umgebung des Kommunikationsroboters in einem Umkreis von 360° richtungsabhängig erfasst, und
- wobei das Tonaufnahmegerät, das mehrere stereoskopische Mikrofone umfasst, so ausgebildet ist, dass es Schallwellen als akustische Signale aus der Umgebung des Kommunikationsroboters in einem Umkreis von 360° richtungsabhängig erfasst,
- der Kommunikationsroboter eingerichtet ist, die erfassten optischen und akustischen Signale mittels des Modems und der Antenne an eine externe Empfangseinrichtung drahtlos zu senden,
- die Basiseinheit (1) eine Verkleidung aufweist, die der Basiseinheit (1) eine entlang der Höhenachse längsausgerichtete eiähnliche äußere Gestalt verleiht,
und **dadurch gekennzeichnet, dass**
- die Basiseinheit (1) einen Sockel (3) aufweist, an dem jede der Stützen mittels jeweils eines Drehgelenks angebracht ist, wobei die jeweilige Stütze in einer durch die Höhenachse verlaufenden Radialebene der Basiseinheit (1) klappbar ist,
- jede der Stützen einen Auslegerarm (4) und einen am Auslegerarm (4) befestigten Ausleger (5) aufweist, wobei jeder der Ausleger (5) eine der eiähnlichen äußeren Gestalt der Verkleidung der Basiseinheit (1) entsprechende konvexe Außenkontur besitzt, wobei der Ausleger (5) bei vollständig eingeklappter Stütze in jeweils einer Auslegermulde (6) der Verkleidung bündig mit der außenliegenden Verkleidung eingepasst ist, und
- der Kommunikationsroboter eine am Sockel (3) der Basiseinheit (1) angeordnete Schwenkvorrichtung zum Ein- und Ausklappen der Stützen aufweist.

2. Kommunikationsroboter nach Anspruch 1, **dadurch gekennzeichnet, dass** jede der Stützen ein Teleskopbein (7) aufweist, dass am Ausleger (5) befestigt ist, wobei das Teleskopbein (7) mittels eines in den Ausleger (5) integrierten Teleskopbein-Antriebs teleskopierbar ist.

3. Kommunikationsroboter nach Anspruch 1 oder 2, **dadurch gekennzeichnet, dass** die Basiseinheit (1) einen Barcode-Scanner beinhaltet.

4. Kommunikationsroboter nach einem der Ansprüche 1 bis 3, **dadurch gekennzeichnet, dass** die Basiseinheit (1) einen QR-Code-Scanner beinhaltet.

5. Kommunikationsroboter nach einem der Ansprüche 1 bis 4, **dadurch gekennzeichnet, dass** der Basiseinheit (1) als Teil der Verkleidung eine Kappe (2) aufweist, wobei die Kappe (2) als Einwegspiegel ausgebildet ist.

6. Kommunikationsroboter nach einem der Ansprüche 1 bis 5, **dadurch gekennzeichnet, dass** der Kommunikationsroboter drei Stützen aufweist, wobei der eingeschlossene Winkel der radial zur Höhenachse verlaufenden Erstreckungslinien zweier benachbarter Stützen im Bereich zwischen 115° und 125° liegt.

7. Kommunikationsroboter nach einem der Ansprüche 1 bis 6, **dadurch gekennzeichnet, dass** die Basiseinheit (1) ein Gestell zur Befestigung der in die Basiseinheit (1) integrierten Komponenten beinhaltet.

8. Kommunikationsroboter nach Anspruch 7, **dadurch gekennzeichnet, dass** das Gestell aus Leichtbaukomponenten aufgebaut ist, wobei die Leichtbaukomponenten im Wesentlichen aus Aluminiumwerkstoffen und/oder carbonfaserverstärkten Kunststoffen bestehen.

9. Kommunikationsroboter nach einem der Ansprüche 1 bis 8, **dadurch gekennzeichnet, dass** die Verkleidung der Basiseinheit (1) im Wesentlichen aus einem carbonfaserverstärkten Kunststoff besteht.

10. Kommunikationsroboter nach einem der Ansprüche 1 bis 9, **dadurch gekennzeichnet, dass** die Basiseinheit (1) eine Spektralkamera zur Bestimmung des elektromagnetischen Spektrums der von den mit der Spektralkamera erfassten Objekten ausgehenden elektromagnetischen Strahlung beinhaltet.

11. Kommunikationssystem, umfassend einen ersten Kommunikationsroboter nach einem der Ansprüche 1 bis 10 und eine Empfangseinrichtung, **dadurch gekennzeichnet, dass** die Empfangseinrichtung ein zweiter Kommunikationsroboter nach einem der Ansprüche 1 bis 10 ist, dessen Basiseinheit (1) ferner einen Bildschirm und ein im Umkreis von 360° schallaussendendes Lautsprechersystem beinhaltet, wobei diese eingerichtet sind, die vom ersten Kommunikationsroboter übertragenen synchronisierten optischen und akustischen Signale realitätsgetreu wiederzugeben.

12. Kommunikationssystem, umfassend einen ersten Kommunikationsroboter nach einem der Ansprüche 1 bis 10 und eine Empfangseinrichtung, **dadurch gekennzeichnet, dass** die Empfangseinrichtung ein VR-Headset umfasst, das eingerichtet ist, die vom ersten Kommunikationsroboter übertragenen synchronisierten optischen und akustischen Signale realitätsgetreu wiederzugeben.

13. Kommunikationssystem nach Anspruch 11 und/oder 12, wobei der erste Kommunikationsroboter nach Anspruch 10 ausgebildet ist, **dadurch gekennzeichnet, dass** die Empfangseinrichtung einen Handschuh oder einen Ganzkörperanzug mit haptischen Feedbackgewebe umfasst, wobei die Empfangseinrichtung eingerichtet ist, aus der durch die Spektralkamera erfassten elektromagnetischen Strahlung eines vom ersten Kommunikationsroboter mittels der Spektralkamera beobachteten Objektes dessen Material- und Zustandseigenschaften zu bestimmen und beim Träger des Handschuhs oder des Ganzkörperanzuges mittels des haptischen Feedbackgewebes einen Tastgefühl zu erzeugen, dass die Haptik des mittels der Spektralkamera beobachteten Objektes nachahmt.

14. Telekommunikationsverfahren unter Verwendung mindestens eines der Kommunikationsroboter nach einem der Ansprüche 1 bis 10 als Sendeeinrichtung oder eines Kommunikationssystems nach einem der Ansprüche 11 bis 13, **dadurch gekennzeichnet, dass** die optischen und akustischen Signale von dem als Sendeeinrichtung eingerichteten Kommunikationsroboter synchronisiert mittels Streaming an eine zur realitätsgetreuen Wiedergabe der optischen und akustischen Signale eingerichtete Empfangseinrichtung übermittelt werden.

15. Telekommunikationsverfahren nach Anspruch 14, **dadurch gekennzeichnet, dass** die von dem als Sendeeinrichtung eingerichteten Kommunikationsroboter gesendeten optischen und akustischen Signale mittels eines zwischengeschalteten Cloud - Computing-Servers so synchronisiert und aufbereitet werden, dass die synchronisierten und aufbereiteten optischen und akustischen Signale in der Empfangseinrichtung zeitverzögerungsfrei und realitätsgetreu wiedergebbar sind.

## Claims

1. Communication robot, comprising a base unit (1) and at least three supports that carry the base unit (1) and support it on the ground when used as intended, the base unit (1) having a height axis that is aligned perpendicular to the ground, wherein
- the base unit (1) contains a camera, a sound recording device, a modem, an antenna, a processor unit and a power supply system,
- wherein the camera is designed in such a way that it captures the visible light as optical signals from the surroundings of the communication robot in a direction-dependent manner over a 360° perimeter, and
- wherein the sound recording device, which includes a plurality of stereoscopic microphones, is designed in such a way that it captures sound waves as acoustic signals from the surroundings of the communication robot in a direction-dependent manner over a 360° perimeter,
- the communication robot is set up to wirelessly transmit the captured optical and acoustic signals to an external receiving device by means of the modem and the antenna,
- the base unit (1) has a covering that gives the base unit (1) an oviform outer shape that is longitudinally aligned along the height axis,
and **characterized in that**
- the base unit (1) has a base (3) to which each of the supports is attached by means of a respective swivel joint, wherein the respective support being foldable in a radial plane running through the height axis of the base unit (1),
- each of the supports has an cantilever arm (4) and a cantilever (5) attached to the cantilever arm (4), each of the cantilevers (5) having a convex outer contour corresponding to the oviform outer shape of the covering of the base unit (1), wherein the cantilever (5) when the support is fully folded in, it is fitted flush with the outer covering in each case in a cantilever recess (6) of the covering, and
- the communication robot has a pivoting device arranged on the base (3) of the base unit (1) for folding the supports in and out.

2. Communication robot according to claim 1, **characterized in that** each of the supports has a telescopic leg (7) which is attached to the cantilever (5), wherein the telescopic leg (7) being telescopic by means of a telescopic leg drive integrated into the cantilever (5).

3. Communication robot according to claim 1 or 2, **characterized in that** the base unit (1) includes a barcode scanner.

4. Communication robot according to one of claims 1 to 3, **characterized in that** the base unit (1) includes a QR code scanner.

5. Communication robot according to one of claims 1 to 4, **characterized in that** the base unit (1) has a cap (2) as part of the covering, the cap (2) being designed as a one-way mirror.

6. Communications robot according to one of claims 1 to 5, **characterized in that** the communications robot has three supports, the included angle of the extension lines of two adjacent supports running radially to the height axis being in the range between 115° and 125°.

7. Communication robot according to one of claims 1 to 6, **characterized in that** the base unit (1) includes a frame for fastening the base unit (1) integrated components.

8. Communication robot according to Claim 7, **characterized in that** the frame is constructed from lightweight components, the lightweight components essentially consisting of aluminum materials and/or carbon fiber reinforced plastics.

9. Communication robot according to one of claims 1 to 8, **characterized in that** the covering of the base unit (1) consists essentially of a carbon fiber reinforced plastic.

10. Communication robot according to one of claims 1 to 9, **characterized in that** the base unit (1) contains a spectral camera for determining the electromagnetic spectrum of the electromagnetic radiation emanating from the objects detected with the spectral camera.

11. Communication system, comprising a first communication robot according to one of claims 1 to 10 and a receiving device, **characterized in that** the receiving device is a second communication robot according to one of claims 1 to 10, the base unit (1) of which also has a screen and a 360° sound-emitting speaker system, which are set up to realistically reproduce the synchronized optical and acoustic signals transmitted by the first communication robot.

12. Communication system comprising a first communication robot according to one of claims 1 to 10 and a receiving device, **characterized in that** the receiving device comprises a VR headset which is set up to realistically reproduce the synchronized optical and acoustic signals transmitted by the first communication robot.

13. Communication system according to claim 11 and/or 12, wherein the first communication robot is designed according to claim 10, **characterized in that** the receiving device comprises a glove or a full body suit with haptic feedback fabric, wherein the receiving device is set up to determine the material and condition properties of an object observed by the first communication robot using the spectral camera from the electromagnetic radiation detected by the spectral camera and to create a tactile sensation for the wearer of the glove or full-body suit using the haptic feedback fabric that imitates the haptics of the object observed using the spectral camera.

14. Telecommunication method using at least one of the communication robots according to one of claims 1 to 10 as a transmitting device or a communication system according to one of Claims 11 to 13, **characterized in that** the optical and acoustic signals are transmitted synchronously by means of streaming from the communication robot set up as a transmitting device to a receiving device set up for realistic reproduction of the optical and acoustic signals.

15. Telecommunication method according to Claim 14, **characterized in that** the optical and acoustic signals sent by the communication robot set up as a transmitting device are synchronized and processed by means of an intermediate cloud computing server in such a way that the synchronized and processed optical and acoustic signals can be reproduced realistically and without a time delay in the receiving device.

## Revendications

1. Robot de communication, comprenant une unité de base (1) et au moins trois supports qui portent l'unité de base (1) et la soutiennent sur le sol lorsqu'elle est utilisée conformément à sa destination, l'unité de base (1) présentant un axe de hauteur qui est orienté perpendiculairement au sol,
dans lequel
- l'unité de base (1) comprend une caméra, un dispositif d'enregistrement de sons, un modem, une antenne, une unité de traitement ainsi qu'un système d'alimentation en énergie,
- la caméra étant conçue de telle sorte qu'elle détecte la lumière visible sous forme de signaux visuels provenant de l'environnement du robot de communication dans un rayon de 360° en fonction de la direction, et
- dans lequel le dispositif d'enregistrement de sons, qui comprend plusieurs microphones stéréoscopiques, est conçu de manière à détecter des ondes sonores en tant que signaux sonores provenant de l'environnement du robot de communication dans un rayon de 360° en fonction de la direction,
- le robot de communication est agencé pour envoyer sans fil les signaux visuels et sonores détectés à un dispositif de réception externe au moyen du modem et de l'antenne,
- l'unité de base (1) comprend un revêtement qui confère à l'unité de base (1) une forme ovoïde extérieure orientée longitudinalement le long de l'axe de hauteur, et **caractérisé en ce que**
- l'unité de base (1) présente un socle (3) sur lequel chacun des supports est monté au moyen d'une articulation tournante respective, le support respectif pouvant être rabattu dans un plan radial de l'unité de base (1) passant par l'axe de hauteur,
- chacun des supports comprend un bras en porte-à-faux (4) et un bras en porte-à-faux (5) fixé au bras (4), chacun des bras en porte-à-faux (5) ayant un contour externe convexe correspondant à la forme ovoïde extérieure du revêtement de l'unité de base (1), le bras en porte-à-faux (5), lorsque le support est complètement replié, étant ajusté dans une cavité de bras en porte-à-faux (6) respective du revêtement à fleur du revêtement extérieur, et
- le robot de communication présente un dispositif de pivotement disposé sur le socle (3) de l'unité de base (1) pour replier et déplier les supports.

2. Robot de communication selon la revendication 1, **caractérisé en ce que** chacun des supports comprend un pied télescopique (7) fixé au bras en porte-à-faux (5), le pied télescopique (7) étant télescopique au moyen d'un entraînement de pied télescopique intégré au bras en porte-à-faux (5).

3. Robot de communication selon la revendication 1 ou 2, **caractérisé en ce que** l'unité de base (1) comprend un lecteur de code à barres.

4. Robot de communication selon l'une des revendications 1 à 3, **caractérisé en ce que** l'unité de base (1) comprend un lecteur de code QR.

5. Robot de communication selon l'une des revendications 1 à 4, **caractérisé en ce que** l'unité de base (1) comporte un capuchon (2) faisant partie de l'habillage, le capuchon (2) étant conçu comme un miroir sans tain.

6. Robot de communication selon l'une des revendications 1 à 5, **caractérisé en ce que** le robot de communication comprend trois supports, l'angle inclus des lignes d'extension de deux supports adjacents s'étendant radialement par rapport à l'axe de hauteur étant compris entre 115° et 125°.

7. Robot de communication selon l'une des revendications 1 à 6, **caractérisé en ce que** l'unité de base (1) comprend un châssis pour la fixation des composants intégrés dans l'unité de base (1).

8. Robot de communication selon la revendication 7, **caractérisé en ce que** le châssis est constitué de composants de construction légère, les composants de construction légère étant essentiellement constitués de matériaux en aluminium et/ou de matières plastiques renforcées par des fibres de carbone.

9. Robot de communication selon l'une des revendications 1 à 8, **caractérisé en ce que** l'habillage de l'unité de base (1) est essentiellement constitué d'une matière plastique renforcée par des fibres de carbone.

10. Robot de communication selon l'une des revendications 1 à 9, **caractérisé en ce que** l'unité de base (1) comprend une caméra spectrale pour déterminer le spectre électromagnétique du rayonnement électromagnétique émis par les objets détectés par la caméra spectrale.

11. Système de communication, comprenant un premier robot de communication selon l'une des revendications 1 à 10 et un dispositif de réception, **caractérisé en ce que** le dispositif de réception est un deuxième robot de communication selon l'une des revendications 1 à 10, dont l'unité de base (1) comprend en outre un écran et un système de haut-parleurs émettant un son dans un rayon de 360°, ceux-ci étant agencés pour reproduire fidèlement les signaux visuels et sonores synchronisés transmis par le premier robot de communication.

12. Système de communication, comprenant un premier robot de communication selon l'une des revendications 1 à 10 et un dispositif de réception, **caractérisé en ce que** le dispositif de réception comprend un casque VR qui est adapté pour reproduire fidèlement les signaux visuels et sonores synchronisés transmis par le premier robot de communication.

13. Système de communication selon la revendication 11 et/ou 12, le premier robot de communication étant réalisé selon la revendication 10, **caractérisé en ce que** le dispositif de réception comprend un gant ou une combinaison intégrale avec des tissus de rétroaction haptique, le dispositif de réception étant conçu, pour déterminer, à partir du rayonnement électromagnétique détecté par la caméra spectrale d'un objet observé par le premier robot de communication au moyen de la caméra spectrale, les propriétés de son matériau et de son état et pour générer chez le porteur du gant ou de la combinaison intégrale, au moyen du tissu haptique à rétroaction, une sensation tactile qui imite l'haptique de l'objet observé au moyen de la caméra spectrale.

14. Procédé de télécommunication utilisant au moins l'un des robots de communication selon l'une des revendications 1 à 10 comme dispositif d'émission ou un système de communication selon l'une des revendications 11 à 13, **caractérisé en ce que** les signaux visuels et sonores sont transmis de manière synchronisée par le robot de communication conçu comme dispositif d'émission au moyen d'un streaming à un dispositif de réception conçu pour la reproduction fidèle à la réalité des signaux visuels et sonores.

15. Procédé de télécommunication selon la revendication 14, **caractérisé en ce que** les signaux visuels et sonores émis par le robot de communication conçu en tant que dispositif d'émission sont synchronisés et préparés au moyen d'un serveur de Cloud Computing intercalé de telle sorte que les signaux visuels et sonores synchronisés et préparés peuvent être reproduits sans retard et fidèlement dans le dispositif de réception.
